# EUROPEAN PATENT SPECIFICATION

(11) **EP 1 383 303 B1**
(45) Date of publication and mention of the grant of the patent: **03.03.2010**
(21) Application number: 03015644.2
(22) Date of filing: 17.07.2003
(51) Int. Cl.: H04N 1/32, H04N 1/00, G06F 9/445

(54) **Image forming apparatus, wrapping method and the program**
Bilderzeugungsgerät, Umwandlungsverfahren und das Programm
Appareil de formation d'images, procédé de conversion et le programme

(30) Priority: 19.07.2002 JP 2002211685; 14.07.2003 JP 2003196228
(43) Date of publication of application: 21.01.2004
(73) Proprietor: Ricoh Company, Ltd., Tokyo 143-8555 (JP)
(72) Inventor: Ohishi, Tsutomu, Fukuoka-shi, Fukuoka (JP); Akiyoshi, Kunihiro, Kurume-shi, Fukuoka (JP); Tanaka, Hiroyuki, Ogohri-shi, Fukuoka (JP); Nakagawa, Katsuhiko, Fukuoka-shi, Fukuoka (JP)
(74) Representative: Muschke, Markus Artur Heinz

(56) References cited:
- EP-A- 0 630 145
- EP-A- 1 170 939
- GB-A- 2 358 070
- GB-A- 2 360 163
- GB-A- 2 370 894
- US-A- 5 124 809
- US-B1- 6 177 957
- PATENT ABSTRACTS OF JAPAN vol. 2002, no. 02, 2 April 2002 (2002-04-02) & JP 2001 282511 A (FUJI XEROX CO LTD), 12 October 2001 (2001-10-12)
- PATENT ABSTRACTS OF JAPAN vol. 2000, no. 10, 17 November 2000 (2000-11-17) & JP 2000 194544 A (COPYER CO LTD), 14 July 2000 (2000-07-14)

## Description

### BACKGROUND OF THE INVENTION

### 1. Field of the Invention

The present invention relates to an image forming apparatus that provides user services on image formation such as copying, printing, scanning, faxing and the like. More particularly, the present invention relates to an image forming apparatus that can absorb version difference between an application and a service used by the application.

### 2. Description of the Related Art

Recently, an image forming apparatus (to be referred to as a compound machine hereinafter) that includes functions of a printer, a copier, a facsimile, a scanner and the like in a cabinet is generally known. The compound machine includes a display part, a printing part and an image pickup part and the like in a cabinet. In the compound machine, three pieces of software corresponding to the printer, copier and facsimile respectively are provided, so that the compound machine functions as the printer, the copier, the scanner and the facsimile respectively by switching the software.

According to such a conventional compound machine, an application program is launched for each function unit such as printer, copier, facsimile and scanner, and each application program has a function to access hardware resources. At that time, it is assumed that a version of an operating system (OS) on which the application program based and a version of OS actually used in the compound machine are the same. However, for example, if the OS is upgraded so that the versions between the OSes are different, there may be a case where a function that has been used so far by the application becomes unusable, or the application itself may become unusable.

Thus, according to the conventional compound machine, if the OS is upgraded in the compound machine, it is required to recompiling the application such that the application operates on the upgraded OS.

Since the conventional compound machine is provided with each software for the printer, the copier, the scanner and the facsimile individually, much time is required for developing the software. Therefore, the applicant has developed an image forming apparatus (compound machine) including hardware resources, a plurality of applications, and a platform including various control services provided between the applications and the hardware resources. The hardware resources are used for image forming processes in a display part, a printing part and an image pickup part. The applications perform processes intrinsic for user services of printer, copier and facsimile and the like. The platform includes various control services performing management of hardware resources necessary for at least two applications commonly, performing execution control of the applications, and image forming processes, when a user service is executed.

According to such a new compound machine, the applications and the control services are provided separately. Thus, after the compound machine is shipped, users or third party venders can develop new applications to install on the compound machine. By doing so, various functions can be provided.

Since the new compound machine is provided with control services, separately from applications, for providing services commonly required by at least two applications, it is necessary to write source code for interprocess communication between the application and the various control services when developing an application.

When developing a new application, it is necessary to precisely grasp application program interfaces (API: including functions and events) provided by each control service and to write the source code according to a predetermined procedure. However, if upgrade of APIs is repeated due to debugging and addition of functions and the like, it becomes difficult for a vendor to develop applications since it is not clear which API version the application should comply with. Thus, there is a possibility that development of the application becomes difficult. In addition, there is a possibility that a version of an API used by the developed application for a control service is different from a version of the API of the control service actually used in the compound machine. If this application is executed on the compound machine, an error may occur and the application may affect the combined machine.

This problem is a new problem that was not a problem for the conventional compound machine that includes fixed functions.

In addition, from the viewpoint of concealment of programs and safety of the system, it is not favorable to disclose all of APIs between the control services and the applications to a third party such as a third vendor developing a new application.

JP-2001 282 511 A discloses an image input/output device for managing driver version to provide a printer capable of efficiently managing the version of a driver. The printer is provided with a version information storage part for storing the versions of respective printer drivers, an output instruction receiving part for receiving the version of a printer driver transmitted from a terminal equipment out of plural terminal equipments connected to a network, a version comparison part for comparing the version transmitted from the equipment with a version stored in a version information storage part, and a version information notification part for notifying the equipment of the version stored in the storage part on the basis of the compared result of the comparison part. The storage part updates the version stored in itself to the version received by the receiving part on the basis of the compared result of the comparison part.

GB-2,370,894 A discloses a method for updating firmware during operation. US 5,745,753 A discloses a remote duplicate database facility with database replication support for online DDL operations.

### SUMMARY OF THE INVENTION

The object of the present invention is to provide an image forming apparatus in which, even if a difference arises between a function used by the application and a corresponding function in the control service due to upgrade of the control service, the application can perform function call without rewriting source code of the application.

The aforementioned object is solved by the subject-matter of the independent claims. The dependent claims are directed to advantageous embodiments.

### ADVANTAGES OF THE INVENTION

Advantageously, since the function called from the application is converted and the converted function is used for function call, function call can be performed from the application without rewriting source program of the application even when the function used by the application and the actual function in the control service are different.

### BRIEF DESCRIPTION OF THE DRAWINGS

Other objects, features and advantages of the present invention will become more apparent from the following detailed description when read in conjunction with the accompanying drawings, in which:
Fig.1 is a block diagram of a compound machine according to a first embodiment of the present invention;
Fig.2 shows an example of a hardware configuration of the compound machine 100 according to a first embodiment of the present invention;
Fig.3 shows the configuration of the VAS 140 in the compound machine 100 of the first embodiment, and relationships among the VAS 140, the applications, the control service layer 150 and the general OS 121;
Fig.4 is a figure for showing an example of the wrapping information file 201 stored in the HD 200 according to the first embodiment of the present invention;
Fig.5 shows an example of the version management table 210 according to the first embodiment of the present invention;
Fig.6 shows a flowchart showing a procedure for wrapping in which version difference is absorbed according to the first embodiment of the present invention;
Fig.7 shows a table including information indicating upgraded or not upgraded, and types of upgrade according to the first embodiment of the present invention;
Fig.8 shows an example of description of the VAS 140 for filling a dummy argument according to the first embodiment of the present invention;
Fig.9 is a flowchart showing the wrapping procedure by the VAS 140 according to the first embodiment of the present invention;
Fig.10 is a flowchart showing a procedure for checking whole version according to the first embodiment of the present invention;
Fig.11 is a flowchart showing a procedure for checking versions function by function according to the first embodiment of the present invention;
Fig.12 is a block diagram of the compound machine of the second embodiment of the present invention;
Fig.13 is a figure showing a configuration of the VAS 841-848 of the compound machine 800 of the second embodiment, and relationship among the VAS 841-848, each application, control service layer 150 and general OS 121 according to the second embodiment of the present invention;
Figs. 14A-14C show examples of configurations of the VAS.

### DETAILED DESCRIPTION OF THE PREFERRED EMBODIMENTS

In the following, an image forming apparatus 'of an embodiment will be described.

### (First embodiment)

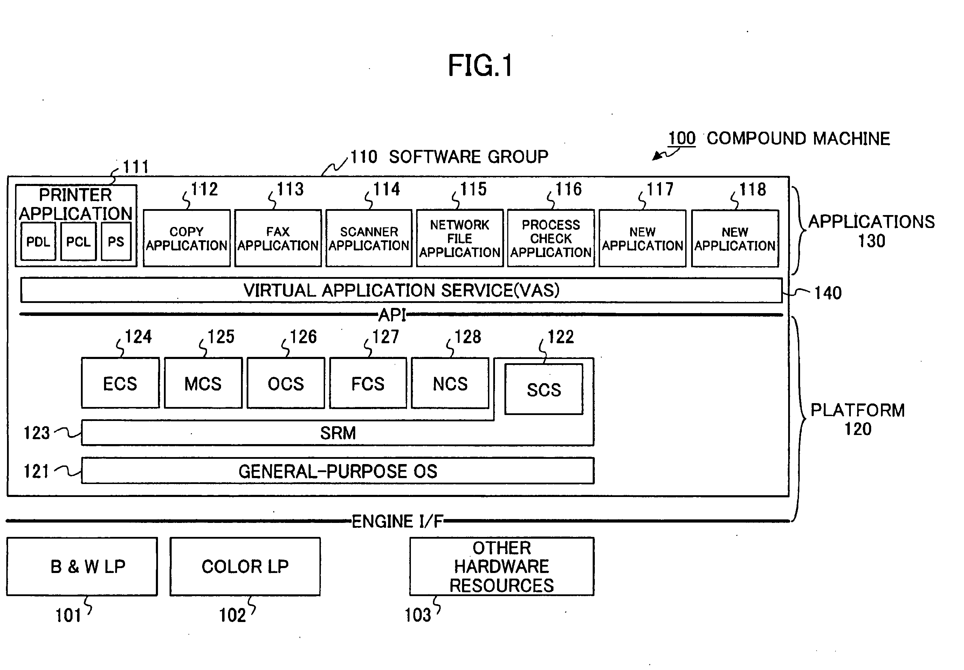

Fig.1 is a block diagram of an image forming apparatus (to be referred to as a compound machine hereinafter, the image forming apparatus can be also referred to as a composite machine, a multifunctional machine or the like) according to the first embodiment of the present invention. As shown in Fig.1, the compound machine 100 includes hardware resources and a software group 110. The hardware resources include a black and white laser printer (B&W LP) 101, a color laser printer 102, and hardware resources 103 such as a scanner, a facsimile, a hard disk, memory (RAM, NV-RAM, ROM and the like) and a network interface. The software group 110 includes a platform 120, applications 130 and a virtual application service 140 (to be referred to as VAS hereinafter).

The VAS 140 is provided between the applications 130 and the platform 120. The VAS 140 is recognized as a service layer in the platform 120 from the application's point of view, and is recognized as an application from the service layer's point of view. In addition, the VAS 140 operates as a server process for the application and operates as a client process for each control service.

A first basic capability of the VAS 140 is to absorb a version difference between a function (which can be referred to as API) used by the application to utilize capabilities of the control service and a corresponding function provided by the control service. By using this capability, even if there is a version difference, the application can perform function call without recompiling the application. In addition, the VAS can intentionally hide platform 120 by selecting messages from the control services. The above mentioned capabilities can be referred to as a wrapping capability.

As a second basis capability, the VAS 140 detects version differences between versions of functions used by the application for the VAS 140 and corresponding functions in the VAS 140, determines whether each version difference is within a range supported by the VAS 140. Then, the VAS 140 sends the determination result to the application, so that the application can determine whether versions between the application and the VAS are consistent with each other before the application actually operates. This capability is referred to as a version management capability.

The VAS program can be stored, for example, in a SD (Secure Digital) card, so that the VAS program can be launched from the SD card. In addition, the VAS program can be installed or launched from a server that includes the VAS program.

The platform 120 includes control services for interpreting a process request from an application to issue an acquiring request for the hardware resources, a system resource manager (SRM) 123 for managing one or more hardware resources and arbitrating the acquiring requests from the control service, and a general-purpose OS 121.

The control services include a plurality of service modules, which are a system control service (SCS) 122, an engine control service (ECS) 124, a memory control service (MCS) 125, an operation panel control service (OCS) 126, a fax control service (FCS) 127, and a network control service (NCS) 128. In addition, the platform 120 has application program interfaces (API) that can receive process requests from the applications 130 by using predetermined functions.

The general purpose OS 121 is a general purpose operating system such as UNIX, and can execute each piece of software of the platform 120 and the applications 130 concurrently as a process.

The process of the SRM 123 is for performing control of the system and performing management of resources with the SCS 122. The process of the SRM 123 performs arbitration and execution control for requests from the upper layer that uses hardware resources including engines such as the scanner part and the printer part, a memory, a HDD file, a host I/Os (Centronics I/F, network I/F IEEE1394 I/F, RS232C I/F and the like).

More specifically, the SRM 123 determines whether the requested hardware resource is available (whether it is not used by another request), and, when the requested hardware resource is available, notifies the upper layer that the requested hardware resource is available. In addition, the SRM 123 performs scheduling for using hardware resources for the requests from the upper layer, and directly performs processes corresponding to the requests (for example, paper transfer and image forming by a printer engine, allocating memory area, file generation and the like).

The process of the SCS 122 performs application management, control of the operation part, display of system screen, LED display, resource management, and interrupt application control.

The process of the ECS 124 controls engines of hardware resources including the white and black laser printer (B&W LP) 101, the color laser printer (Color LP) 102, the scanner, and the facsimile and the like. The process of the MCS 125 obtains and releases an area of the image memory, uses the hard disk apparatus (HDD), and compresses and expands image data.

The process of the FCS 127 provides APIs for sending and receiving of facsimile from each application layer of the system controller by using PSTN/ISDN network, registering/referring of various kinds of facsimile data managed by BKM (backup SRAM), facsimile reading, facsimile receiving and printing, and mixed sending and receiving.

The NCS 128 is a process for providing services commonly used for applications that need network I/O. The NCS 128 distributes data received from the network by a protocol to a corresponding application, and acts as mediation between the application and the network when sending data to the network. More specifically, the process of the NCS 128 includes server daemon such as ftpd, httpd, lpd, snmpd, telnetd, smtpd, and client function of the protocol.

The process of the OCS 126 controls an operation panel that is a means for transferring information between the operator (user) and control parts of the machine. In the compound machine 100 of the embodiment, the OCS 126 includes an OCS process part and an OCS function library part. The OCS process part obtains an key event, which indicates that the key is pushed, from the operation panel, and sends a key event function corresponding to the key event to the SCS 122. The OCS function library registers drawing functions and other functions for controlling the operation panel, in which the drawing functions are used for outputting various images on the operation panel on the basis of a request from an application that has control right or from the control service. When the application is developed, functions in the OCS function library is linked to an object program that is generated by compiling a source code file of the application, so that an executable file of the application is generated.

The application 130 includes a printer application 111 that is an application for a printer having page description language (PDL) and PCL and post script (PS), a copy application 112, a fax application 113 that is an application for facsimile, a scanner application 114 that is an application for a scanner, a network file application 115 and a process check application 116. When each of these application is launched, the application sends an application registering request message with a process ID of its process to the VAS 140. The VAS 140 that receives the application registering request message performs registration processing for the launched application.

Interprocess communication is performed between a process of the application 130 and a process of the control service, in which a function is called, a returned value is sent, and a message is sent and received. By using the interprocess communication, user services for image forming processes such as copying, printing, scanning, and sending facsimile are realized.

As mentioned above, the compound machine 100 of the first embodiment includes a plurality of applications 130 and a plurality of control services, and each of those operates as a process. In each process, one or more threads are generated and the threads are executed in parallel. The control services provide common services to the applications 130. User services on image formation such as copying, printing, scanning and sending facsimile are provided while the processes are executed in parallel, the threads are executed in parallel, and interprocess communication is performed. A third party vendor can develop applications 117, 118 for the compound machine 100, and can executes the application in an application layer on the control service layer in the compound machine 100. Fig.1 shows an example including new applications 117 and 118.

In the compound machine of the first embodiment, although processes of applications 130 and processes of control services operate, each of the application and the control service can be a single process. An application in the applications 130 can be added or deleted one by one. In the compound machine 100 of the first embodiment, in addition to the VAS 140, dynamic link library (DLL) can be adopted.

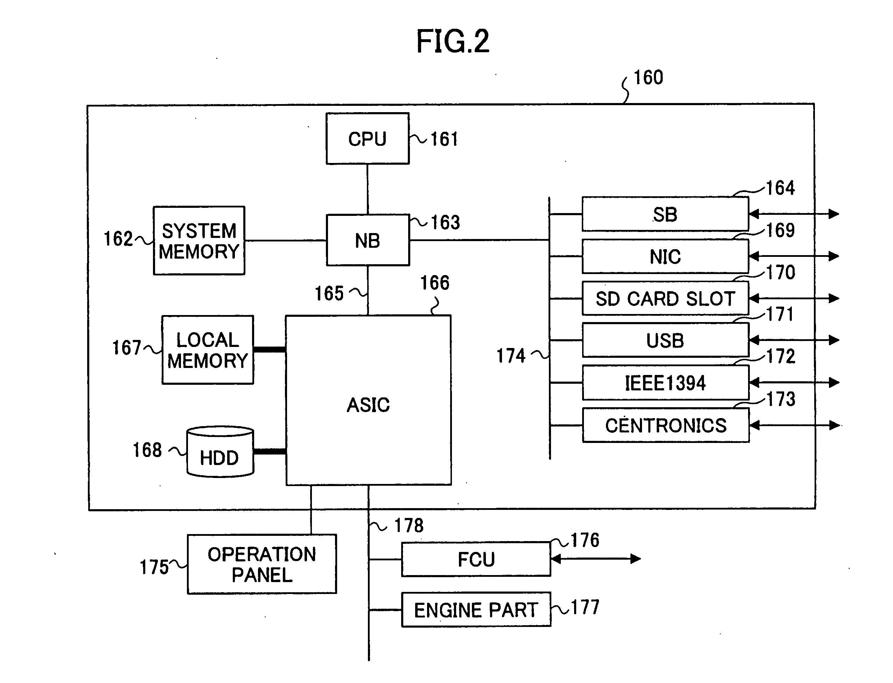

Fig.2 shows an example of a hardware configuration of the compound machine 100.

The compound machine includes a controller 160, an operation panel 175, a fax control unit (FCU) 176, and an engine part 177 that is hard ware resource such as a printer that is specific for image forming processing. The controller 160 includes CPU 161, a system memory 162, a north bridge (NB) 163, a south bridge (SB) 164, ASIC 166, a local memory 167, HDD 168, a network interface card (NIC) 169, a SD card slot 170, a USB device 171, an IEEE1394 device 172, and a Centronics 173. The memories 162, 167 may include RAMs and/or ROMs, for example. The FCU 176 and the engine part 177 are connected to the ASIC 166 in the controller via a PCI bus 178. The CPU 161 executes programs of the application and control services and the like installed in the compound machine 100 by reading from a RAM.

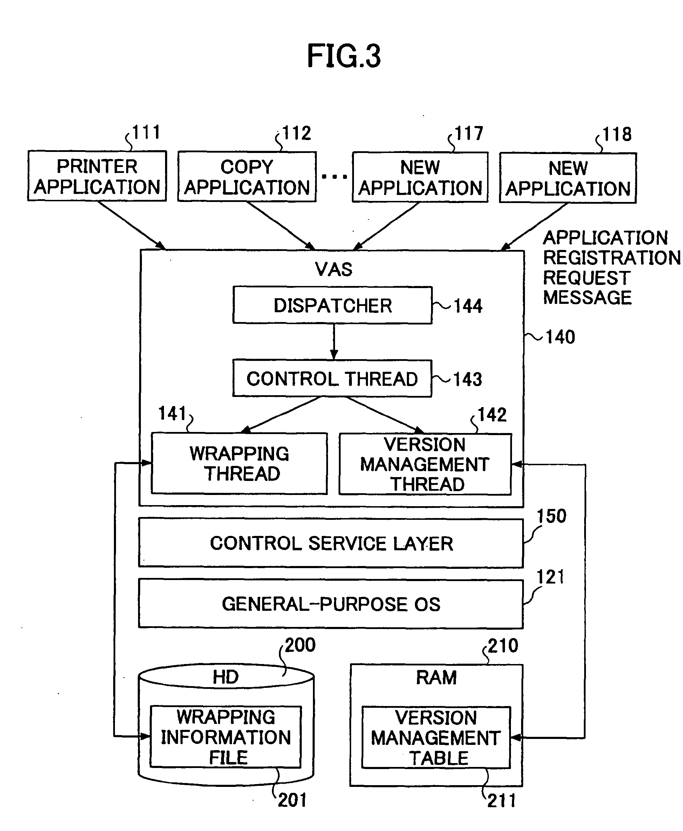

Fig.3 shows the configuration of the VAS 140 in the compound machine 100 of the first embodiment, and relationships among the VAS 140, the applications, the control service layer 150 and the general OS 121. Although Fig.3 shows the printer application 111, the copy application 112, the new applications 117 and 118 as examples of the applications 130, other applications can be provided in the same way.

In the process of the virtual application service (VAS) 140, a dispatcher 144, a control thread 143, a wrapping thread 141 and a version management thread 142 operate.

The dispatcher 144 monitors receiving message from the applications and the control services, and sends a process request to the control thread 143, the wrapping thread 141 or the version management thread 142 according to the received message. In the compound machine 100 of the first embodiment, when the dispatcher 144 receives an application registration request message when the application launches, the dispatcher 144 sends the application registration request message to the control thread 143.

The control thread 143 performs an application registration process when receiving the application registration request message from the dispatcher 144. In the application registration process, the control thread 143 generates an application registration table in the RAM 210, and stores an application ID in the application registration table, in which the application ID is an identifier of an application that sent the application registration request message. In addition, the control thread 143 refers to a wrapping information file 201 stored in the HD 200 to check whether wrapping information is stored for the registered application.

The outline of the capability of the wrapping thread 141 is as follows.

Even if a function (API) used in the application side for the control service is not upgraded even after the control service is upgraded in which arguments are added in the corresponding function (API) for example, the wrapping thread 141 can absorb the difference of the functions by converting the function called from the application.

Further, the wrapping thread 141 has capability to select messages sent from the control service layer 150 to the application by referring to a wrapping information file 201. Accordingly, interfaces that may largely affect the system of the compound machine 100 can be concealed from a third party vendor, so that the control service can be prevented from directly being accessed. Thus, security of the compound machine can be improved and failure can be prevented from occurring.

The version management thread 142 receives a process request from the control thread 143. In addition, the version management thread 142 detects difference between a version of a function used by the application for the VAS 140 and a version of a corresponding actual function in the VAS 140. Then, the version management thread 142 determines whether the version difference is within a range that can be covered by the VAS 140 by referring to the version management table 211.

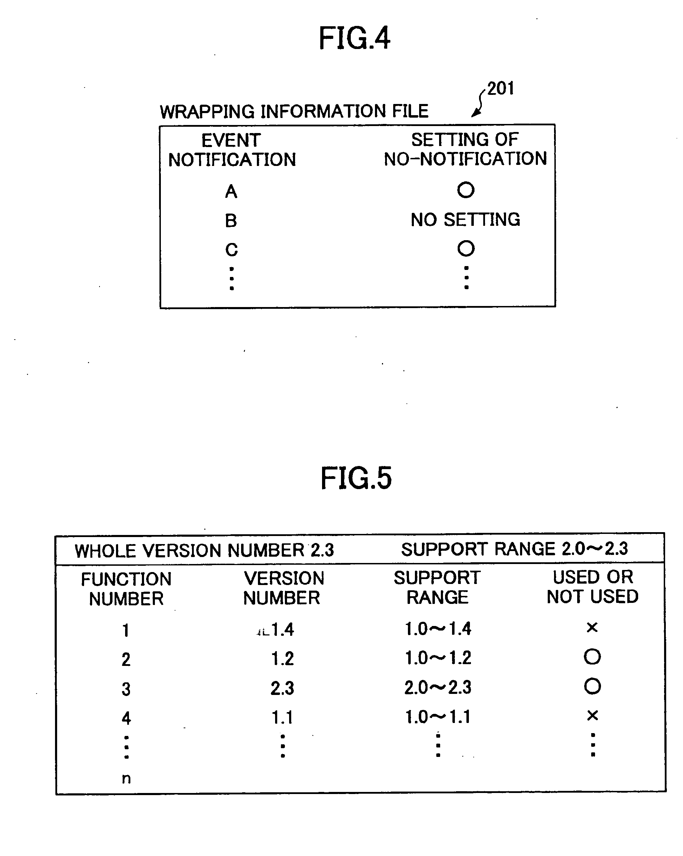

Fig.4 is a figure for showing an example of the wrapping information file 201 stored in the HD 200. As shown in Fig.4, the wrapping information file 201 is an information file in which no-notification setting is set for messages (event) sent from the control service layer 150 to the application. The no-notification setting can be set message by message such that interfaces that may affect largely on the system are hidden to the third party. Since No-notification setting is set for the events A and C shown in Fig.4, the events are not sent to the application. As for the event B, since the no-notification setting is not set, the event is sent to the application as normal.

Fig.5 shows an example of the version management table 210. This table can be included in the execution file of the VAS 140, and the table is stored, for example, in the RAM 210 when the VAS 140 is executed. To include the table in the execution file, for example, an include file including information of the table is included in the program of the VAS 140 and the program is compiled. In addition, the table can be prepared as a file, and the file is stored in the compound machine so that the VAS 140 can refer to the file.

As shown in Fig.5, the version management table 211 includes whole version number of the VAS 140 and a range of whole version of the application that the VAS 140 can support. For example, the range that can be covered by the VAS 140 is from a version of the current VAS to a predetermined-range old version.

The whole version of the VAS 140 means a version of a set of functions provided by the VAS 140, and the whole version of the application is a version of a set of functions used by the application for the VAS 140. The version of the set of functions used by the application for the VAS 140 is the same as the version of the set of the functions in the VAS 140 at the time when the application was developed.

In addition, as shown in Fig.5, the version management table 211 includes, function by function, versions of functions in the VAS 140 and version ranges of functions that the application can use for the VAS 140. Although the VAS 140 performs above-mentioned capabilities by using the above-mentioned threads, the VAS 140 can also performs the above-mentioned capabilities by using a process instead of using multiple threads.

In the following, wrapping process and version management by the VAS 140 of the compound machine 100 will be described. The wrapping process will be described first.

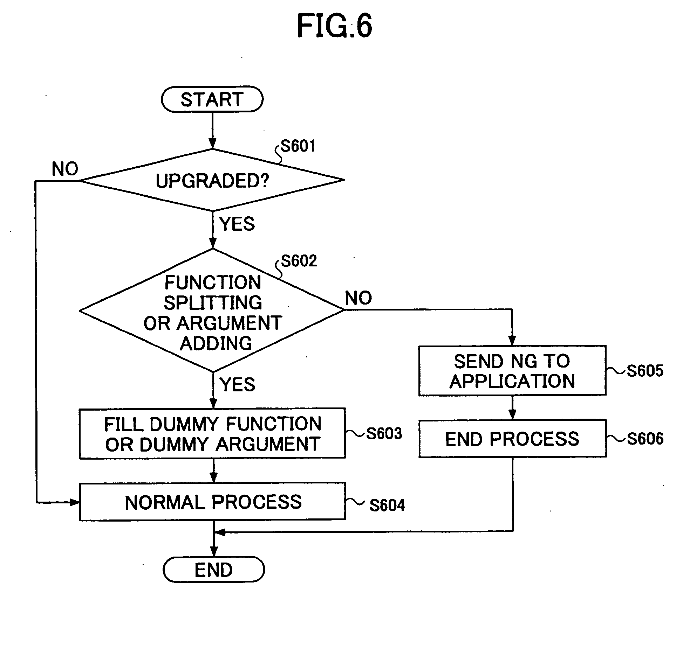

Fig.6 shows a flowchart showing a procedure for wrapping in which version difference is absorbed. If a function is upgraded in the control service, the function may be different from a corresponding function in the application side due to version difference. The 'procedure shown in Fig.6 is for absorbing the version difference.

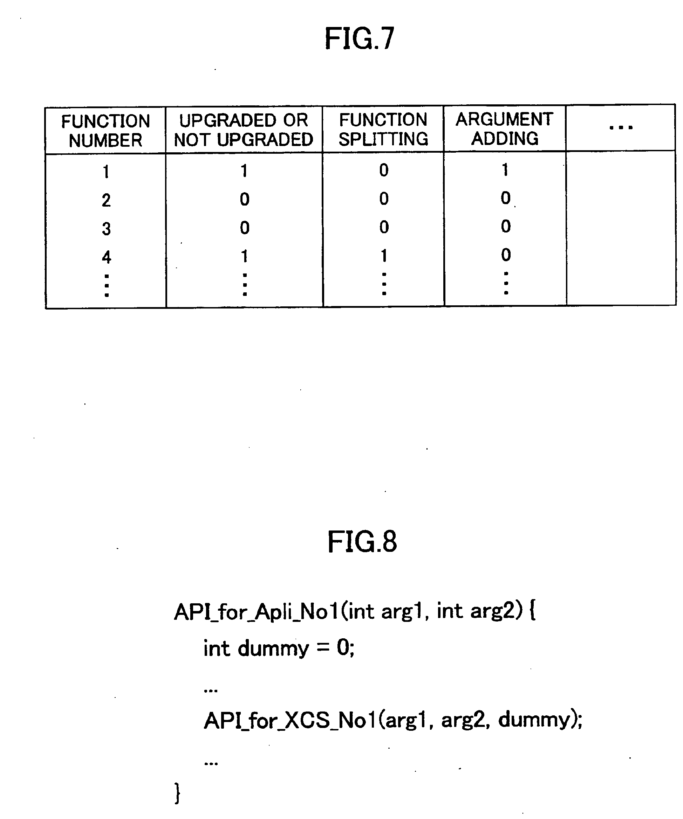

The VAS 140 has information, for each function of each control service, indicating whether a function has been upgraded and, if upgraded, indicating types of the upgrade. This information can be included as a table shown in Fig.7 when producing the program of the VAS 140. The types of the upgrade may be, for example, function adding, function splitting, function deleting, function changing, function integrating, argument adding, argument splitting, argument deleting and' the like.

In step S601, the VAS 140 checks whether a function corresponding to a function called from the application has been upgraded in the control service by referring to information shown in Fig.7. If the function has not been upgraded, normal process is performed in step S604. If the function has been upgraded, the VAS 140 checks whether the type of the upgrade is function splitting or argument adding in step S602.

If the type of the upgrade is neither the function splitting or the argument adding, the type is function deleting, function change, function integration and the like. In this case, the function corresponding to the function called from the application does not exist in the control service, so that the process of the function can not be performed. Thus, the VAS 140 sends NG to the application in step S605 and ends the procedure in step S606.

In step S602, if the type of the upgrade is function splitting or argument adding, the number of functions or the number of arguments is increased in the control service. Thus, dummy functions or dummy arguments are filled for the increased functions or the increased arguments in step S603. Then, normal process continues in step S604. An example of the VAS description in which a dummy argument is filled is shown in Fig.8. As shown in Fig.8, a function "API_for_Apli_No1(int arg1, int arg2)" that receives a request from the application is converted to a function "API_for_XCS_No1(arg1, arg2, dummy)" that includes the dummy argument "dummy".

Even if the control service is upgraded in which a function is added, there is no change for existing functions. Thus, this upgrade does not affect the application although the application can not use the added function.

Next, a procedure for concealing predetermined interfaces of the control service will be described. If every message (for example, event) from control services is sent to an application, it becomes possible to directly access control services that largely affect the system of the compound machine 100, which is not favorable for keeping security of the compound machine and for preventing occurrence of failure. For solving this problem, events that are not sent to the application can be set beforehand in the wrapping information file 201. The setting can be made in any way. For example, the wrapping information file 201 is produced in the outside of the compound machine 100, then the file 201 can be stored in the compound machine 100. In addition, the VAS 140 may display a screen for setting information in the file 201, and the information also can be set from the screen. In addition, the information can be included in the execution file of the VAS 140.

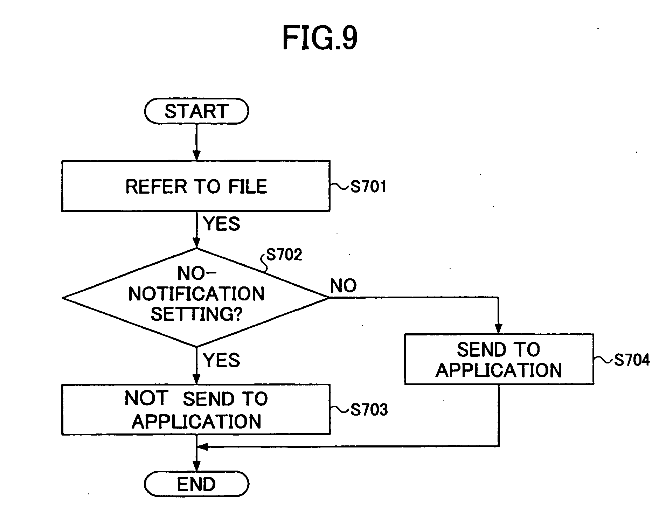

Fig.9 is a flowchart showing the wrapping procedure by the VAS 140.

When an message is notified from the control service to an application, the wrapping thread 141 refers to the wrapping information file 201 in step S701, and the wrapping thread 141 checks whether no-notification is set for the message in step S702. If the no-notification is set for the message, the message is not sent to the application in step S703.

If setting for the message is not including in the wrapping information file 201 or the no-notification is not set in step S701, the message is sent to the application as usual in step S704.

As mentioned above, whether an event is sent to the application or not can be set beforehand, it becomes possible to improve security of the compound machine and to prevent occurrence of failure beforehand. In addition, since predetermined interfaces need to be disclosed to third parties such as third vendors that develop new applications, it is very important to be able to select interfaces to be disclosed.

Next, a procedure will be described for checking version difference between a function (API) used by the application for the VAS 140 and a corresponding function in the VAS 140. As mentioned above, the VAS 140 can absorb version difference between the application and the control service. However, due to upgrade of the VAS 140 itself and the like, a version of a function used by the application for the VAS 140 may be different from a version of a corresponding function in the VAS 140. In the following method, the VAS 140 checks the version difference, and if the version difference can be supported by the VAS 140, the application can continue normal process.

The application has whole version information and versions of functions used for the VAS 140 for each function. When the application is launched, version information is sent to the VAS 140 by using interprocess communication. The version information may be included in the execution program of the application when producing the program.

The version check can be performed at any time before the application is executed. In this embodiment, although the version check is performed when the application is registered, the time when the version check is performed is not limited to this. For example, the version check can be performed by tentatively launching the application. The tentative launch of the application is to launch the application only for performing interprocess communication with the VAS 140 so that the VAS 140 can obtain information of the application. In this case, the application is configured such that the tentative launch is available.

At the time of registration of the application, following processes are performed.

When the dispatcher 144 receives an application registration request message from a launched application, the dispatcher 144 passes the application registration request message to the control thread 143 with the process ID of the application. When the control thread 143 receives the application registration request message and the process ID from the dispatcher 144, the control thread 143 determines an application ID for identifying the application and stores the application ID in an application registration table in a RAM, so that registration of the application is performed. The application ID is predetermined for existing applications such as the copy application 112, the printer application, and the VAS keeps each application ID in the inside. As to the new applications developed by the third vendor and the like, the application ID is determined when the application is registered when the application is launched at the first time.

In the following, version check procedures will be described for a case of checking whole version and a case of checking versions for each function. Instead of performing the procedures separately for each case, the function-by-function version check can be performed only when difference of the whole version is not within a range that the VAS 140 can support.

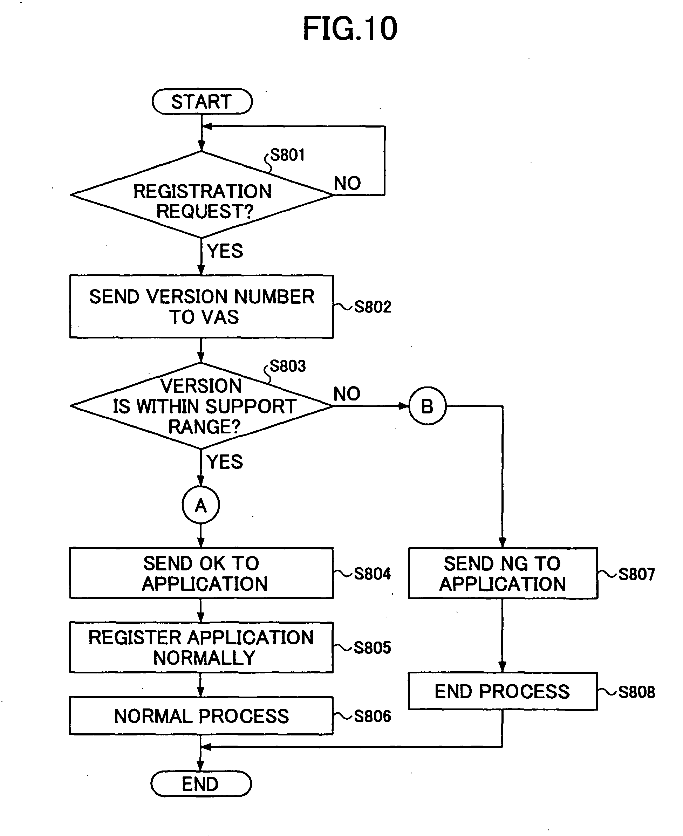

First, the procedure for whole version check will be described with reference to Fig.10.

When the VAS 140 receives a request for application registration in step S801, the VAS 140 obtains the whole version number of the application from the application in step S802. The VAS 140 compares the whole version number of the application and the version support range in the version management table 211, and determines the whole version of the application is within the support range in step S803. For example, assuming that the version range that the currently used VAS 140 can support is 1.0-1.6. In this case, if the whole version of the application is within 1.0-1.6, the VAS 140 determines the whole version is within the range. In this case, "OK" is sent to the application in step S804, and the application is properly registered in step S805, and normal process is performed in the compound machine 100 in step S806. If the VAS 140 determines that the whole version of the application is out of the range, the VAS 140 sends "NG" to the application in step S807, and the process ends in step S808.

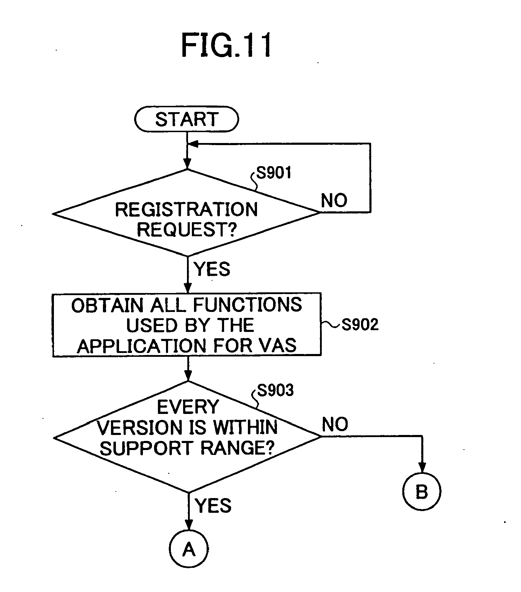

Next, the procedure for checking versions function by function will be described with reference to Fig.11.

In the same way as the case of Fig.10, the version check can be performed at any time before the application is executed. Also in this embodiment, the version check is performed when the application is registered.

When there is a request of application registration in step S901, the VAS 140 obtains, function by function, version information of functions used by the application for the VAS 140 from the application in step S902. Then, the VAS 140 refers to the version management table 211. For each function used by the application for the VAS 140, the VAS 140 compares a version of a function used by the application and a support range corresponding to the function, so that the VAS 140 determines whether the version of the function is within the support range in step S903. For example, if the functions used by the application are "2" and "3", and if the version of the functions are "1.1" and "2.0" respectively, each function is within the support range as shown in Fig.5.

In the process shown in Fig.11, when the VAS 140 determines that every function is within the support range, the procedure after that is the same as steps S804-S806 in Fig.10. When the VAS determines that at least a function is not within the support range, the procedure after that is the same as steps S807-S808 in Fig.10. When the result is NG, the VAS 140 may display names of functions that are out of the support range on the operation panel.

If a function that is not used by the application is upgraded in the VAS 140, the whole version of the VAS 140 is changed. Thus, if only the whole version check is performed, there is a case where the application can not be executed due to whole version difference. On the other hand, if the version check is performed for each function used,by the application, the VAS 140 can determine that the application can be executed without problems in the above-mentioned case. In addition, by checking function by function, a function that can not be supported by the VAS 140 can be specified easily.

As mentioned above, according to the compound machine 100 of the first embodiment, the wrapping thread 141 of the VAS 140 absorbs version difference. Thus, even if the control service is upgraded, it is not necessary to recompile the application. In addition, the VAS 140 can select messages to be sent to the application from the control service. Thus, interfaces that may largely affect the system of the compound machine 100 can be concealed from third parties.

In addition, according to the compound machine 100 of the first embodiment, the VAS 140 can check versions of functions by using version information obtained from the application. Thus, the application can be executed safely. In addition, according to the compound machine 100 of the first embodiment, the dynamic link library (DLL) can be adopted in addition to the VAS 140. In this case, the version difference between the application and the control services can be absorbed more efficiently, and interfaces can be hidden. Thus, the interfaces can be concealed more firmly.

### (Second embodiment)

The compound machine 100 of the first embodiment includes one VAS for all applications. According to the compound machine of the second embodiment, a plurality of VASes are launched for each application in which each VAS performs version management and wrapping.

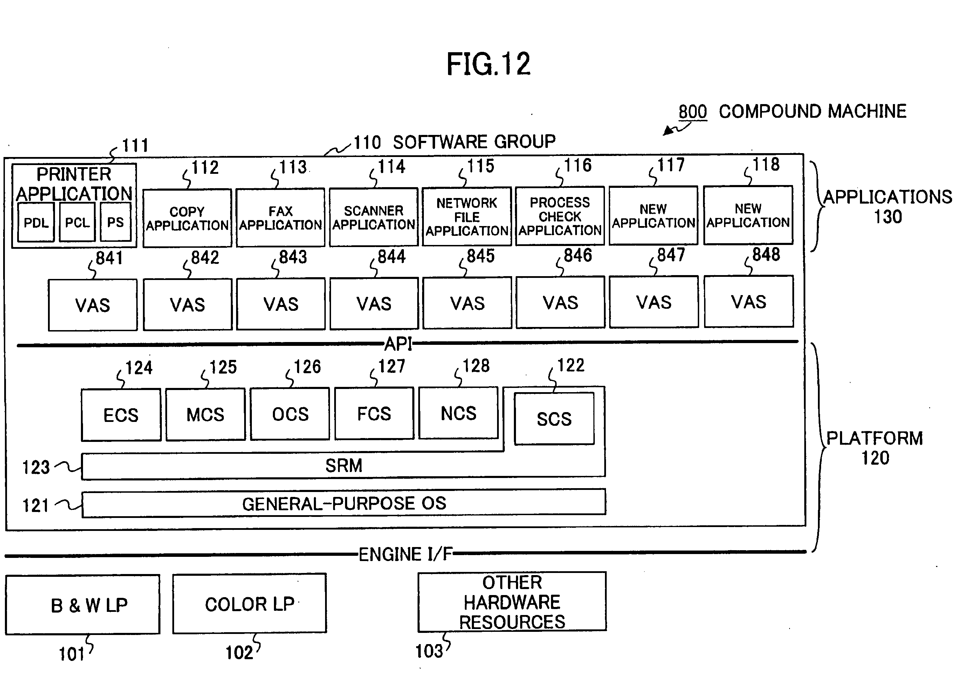

Fig.12 is a block diagram of the compound machine of the second embodiment. As shown in Fig.12, the compound machine 800 is different from the compound machine of the first embodiment in that a plurality of virtual application services operate for each application.

The VASes 841-848 performs version management and wrapping for the printer application 111, copy application 112, fax application 113, the scanner application 114, the net file application 115 and the process check application 116 and the new applications 117 and 118.

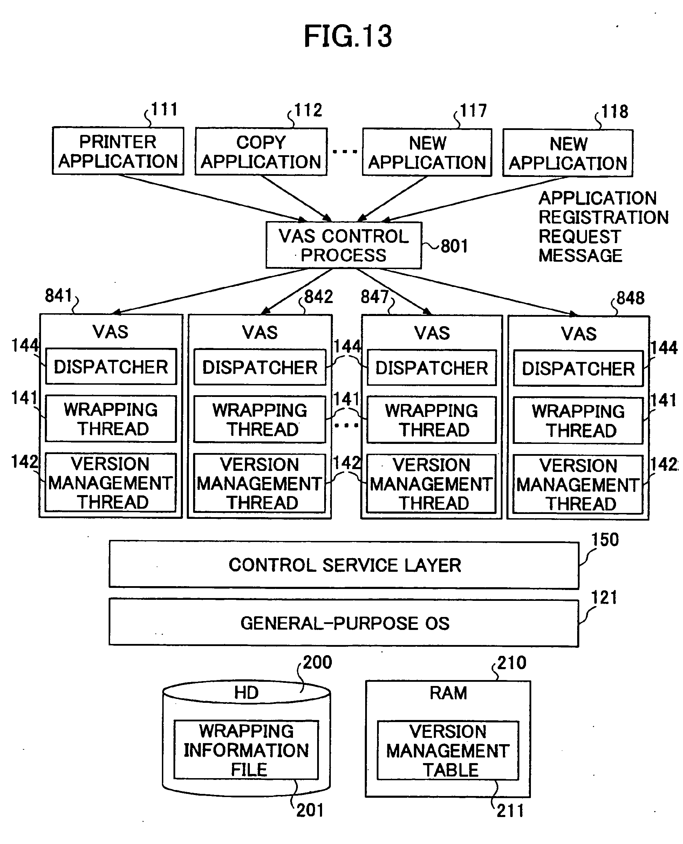

Fig.13 is a figure showing a configuration of the VAS 841-848 of the compound machine 800 of the second embodiment, and relationship among the VAS 841-848, each application, control service layer 150 and general OS 121. Although Fig.13 shows the printer application 111, the copy application 112, the new applications 117 and 118 as the applications, and corresponding VASes 841, 842, 847 and 848 as an example, same configuration can be adopted for other applications.

According to the compound machine 800 of the second embodiment, different from the compound machine 100 of the first embodiment, as shown in Fig.13, a VAS control daemon 801 operates between the VAS and an application. The VAS control process (daemon) 801 receives application registration request messages from each application to perform application registration. In addition, the VAS control process (daemon) 801 generates the VASes 841-848 corresponding applications that request application registration. In addition, the VAS control process (daemon) 801 sends instructions to each thread.

Each process of the virtual application service (VAS) includes the dispatcher 144, the wrapping thread 141, and the version management thread 142.

The dispatcher 144 monitors a message from applications and control services, and sends a process request to the wrapping thread 141 or the version management thread 142 according to the received message. In the compound machine 800 of the second embodiment, the dispatcher 144 receives, from the VAS control process 801, a version management request message or a wrapping request message with application ID and process ID of the application. When the dispatcher 144 receives the version management request message, the dispatcher 144 sends the version management request message, the application ID, and the process ID to the version management thread 142. When the dispatcher 144 receives the wrapping request message, the dispatcher 144 sends the wrapping request message, the application ID, and the process ID to the wrapping thread 141.

The capabilities of each of the version management thread 142 and the wrapping thread 141 are the same as those of the first embodiment.

According to the compound machine 800 of the second embodiment, effects same as the first embodiment can be obtained. In addition, according to the compound machine 800 of the second embodiment, the VAS is launched for each application. Thus, determination for a plurality of applications can be performed in parallel by the corresponding VASes. Thus, the determination can be performed more efficiently. In addition, since the version management and the wrapping can be performed for each application in parallel, even if an application is added or changed, the version management and the wrapping can be performed efficiently.

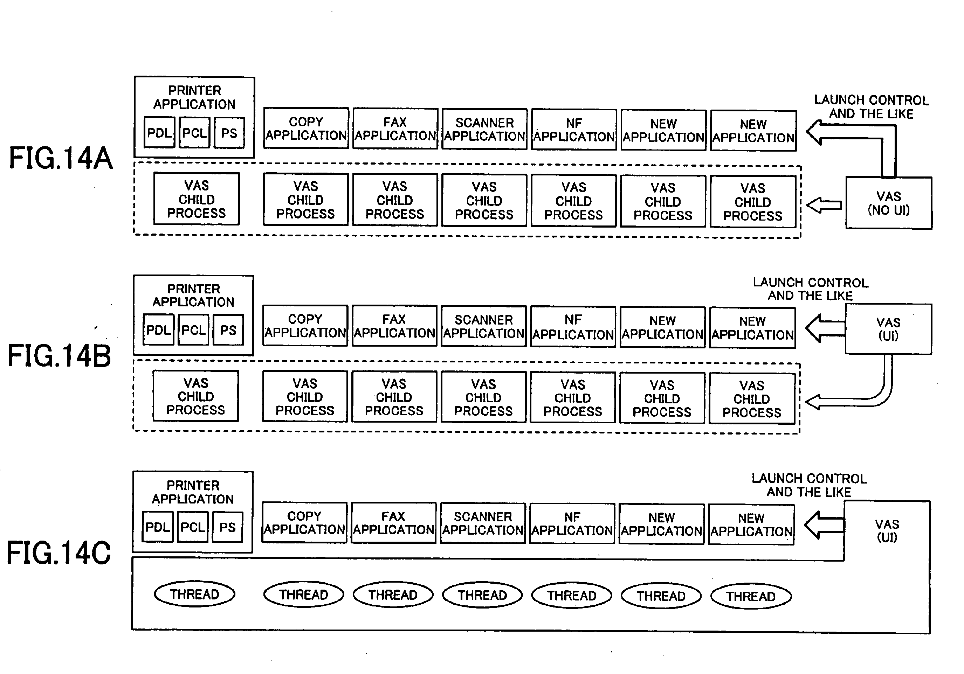

As the configuration of the VAS, configurations shown in Figs.14A-14 can be also adopted. Fig.14A shows a case in which child processes of a parent VAS is used for each application, in which the parent VAS does not have screen control right (does not have user interface). Fig.14B shows a case in which the parent VAS has the screen control right. Fig.14C shows a case in which the functions of VAS are provided by using threads for each application.

As mentioned above, according to the present invention, an image forming apparatus that includes an application for performing processes on image formation and an control service for performing system side processes according to a function call from the application is provide, in which the image forming apparatus includes a wrapping part for converting a function called by the application, and performing a function call to the control service by using the converted function.

According to the image forming apparatus, since the function called from the application is converted and the converted function is used for function call, function call can be performed from the application without rewriting source program of the application even when the function used by the application and the actual function in the control service are different.

In image forming apparatus, wherein the wrapping part converts the function if there is a version difference between the function used by the application for the control service and a corresponding function in the control service. Thus, for example, if a function in the control service side is upgraded and version difference arises, the function called by the application is converted. Accordingly, failure due to mismatch of versions can be prevented.

In image forming apparatus, the wrapping part determines whether there is the version difference by referring to information indicating that a version of the corresponding function in the control service has been changed. Thus, it can be determined whether there is the version difference properly.

In the image forming apparatus, wherein the wrapping part converts the function by adding at least a dummy function or at least an argument if the number of functions or the number of arguments is different between the function used in the application for the control service and the corresponding function in the control service.

Conventionally, if the number of functions or the number of arguments is different between a function used by the application and a corresponding function in the control service, the application can not perform function call. On the other hand, according to the present invention, by adding dummy functions or dummy arguments in positions corresponding to increased functions or increased arguments, the application can perform function call.

In addition, an image forming apparatus including a wrapping part for selecting messages to be sent to the application from among messages sent from the control service is provided.

According to the present invention, interfaces for accessing the control service can be concealed from third parties.

In the image forming apparatus, the wrapping part selects the massages by referring to information indicating predetermined messages that should not be sent to the application.

According to this configuration, since wrapping part refers to information indicating predetermined messages that should not be sent to the application, necessary messages can be selected easily by storing desired messages in the information.

The image forming apparatus may include a virtual application service that operates as a client process for the control service and operates as a server process for the application, wherein the wrapping part is included in the virtual application service.

In addition, the image forming apparatus may include: a version check part for determining whether a version of a set of functions used by the application for the virtual application service is within a predetermined range that the virtual application service can support. Thus, the version check part can determine whether the version of the set is within the range supported by the virtual application service. Therefore, for example, by performing the determination before actually using the application, it can be determined whether the application can be used on the virtual application service, so that failures can be prevented from occurring.

In the above-mentioned image forming apparatus, the version check part obtains the version of the set of the functions from the application, and determines whether the version is within the predetermined range by referring to information including the predetermined range. Thus, the determination whether the version is within the predetermined range can be performed easily.

The image forming apparatus may include: a version check part for determining, function by function, whether a version of a function used by the application for the virtual application service is within a predetermined range that the virtual application service can support. Accordingly, since the version is checked function by function, if a function that is not used by the application is upgraded, it can be determined properly that this upgrade does not affect operation of the application. In addition, a function that is out of the support range can be specified easily.

In the above-mentioned image forming apparatus, the version check part obtains the version of the function from the application, and determines whether the version is within the predetermined range by referring to information including the predetermined range. Thus, the determination can be performed easily.

The present invention is not limited to the specifically disclosed embodiments, and variations and modifications may be made. The invention is defined by the following claims.

## Claims

1. An image forming apparatus (100) that includes hardware resources for image formation and an application (130) for performing processes on image forming and an control service (122, 124 to 128, 150) to control the execution of each requested process of the hardware resources according to a function call from the application (130), **characterized in that**:
the image forming apparatus (100) comprising:
a virtual application service (140) that operates as a client process for the control service (122, 124 to 128, 150) and operates as a server process for the application (130), and
a wrapping part (140) for converting a function called by the application (130), and performing a function call to the control service (122, 124 to 128, 150) by using the converted function, wherein the wrapping part (140) is included in the virtual application service (140).

2. The image forming apparatus (100) as claimed in claim 1, wherein the wrapping part (140) converts the function if there is a version difference between the function used by the application (130) for the control service (122, 124 to 128, 150) and a corresponding function in the control service (122, 124 to 128, 150).

3. The image forming apparatus (100) as claimed in claim 2, wherein the wrapping part (140) determines whether there is the version difference by referring to information indicating that a version of the corresponding function in the control service (122, 124 to 128, 150) has been changed.

4. The image forming apparatus (100) as claimed in claim 1, wherein the wrapping part (140) converts the function by adding at least a dummy function or at least an argument if the number of functions or the number of arguments is different between the function used in the application (130) for the control service (122, 124 to 128, 150) and the corresponding function in the control service (122, 124 to 128, 150).

5. The image forming apparatus (100) as claimed in claim 1,
wherein the wrapping part (140) selects messages to be sent to the application (130) from among messages sent from the control service (122, 124 to 128, 150).

6. The image forming apparatus (100) as claimed in claim 5, wherein the wrapping part (140) selects the messages by referring to information indicating predetermined messages that should not be sent to the application (130).

7. The image forming apparatus (100) as claimed in claim 6, the image processing apparatus (100) comprising:
a version check part for determining whether a version of a set of functions used by the application (130) for the virtual application service (140) can be supported by the virtual application service (140).

8. The image forming apparatus (100) as claimed in claim 7, wherein the version check part obtains the version of the set of the functions from the application (130), and determines whether the version can be supported by the virtual application service (140) by referring to information including the version numbers from the functions which can be supported by the virtual application service (140).

9. The image forming apparatus (100) as claimed in claim 6, the image processing apparatus (100) comprising:
a version check part for determining, function by function, whether a version of a function used by the application (130) for the virtual application service (140) can be supported by the virtual application service (140).

10. The image forming apparatus (100) as claimed in claim 9, wherein the version check part obtains the version of the function from the application (130), and determines whether the version can be supported by the virtual application service (140)by referring to information including the version numbers from the functions which can be supported by the virtual application service (140).

11. A method performed by an image forming apparatus (100) that includes hardware resources for image formation and an application (130) for performing processes on image forming and an control service (122, 124 to 128, 150) to control the execution of each requested process of the hardware resources according to a function call from the application (130) **characterized in that**:
the method comprising:
a virtual application service (140) that operates as a client process for the control service (122, 124 to 128, 150) and operates as a server process for the application (130), and
a wrapping step of converting a function called by the application (130), and performing a function call to the control service (122, 124 to 128, 150) by using the converted function, wherein the wrapping step is performed by the virtual application service (140).

12. The method as claimed in claim 11, wherein the image forming apparatus (100) converts the function if there is a version difference between the function used by the application (130) for the control service (122, 124 to 128, 150) and a corresponding function in the control service (122, 124 to 128, 150).

13. The method as claimed in claim 12, wherein the image forming apparatus (100) determines whether there is the version difference by referring to information indicating that a version of the corresponding function in the control service (122, 124 to 128, 150) and a corresponding function in the control service (122, 124 to 128, 150).

14. The method as claimed in claim 11, wherein the image forming apparatus (100) converts the function by adding at least a dummy function or at least an argument if the number of function or the number of arguments is different between the function used in the application (130) for the control service (122, 124 to 128, 150) and the corresponding function in the control service (122, 124 to 128, 150).

15. The method as claimed in claim 11, wherein
the wrapping step selects messages to be sent to the application (130) from among messages sent from the control service (122, 124 to 128, 150).

16. The method as claimed in claim 15, wherein the image forming apparatus selects the messages by referring to information indicating predetermined messages that should not be sent to the application.

17. The method as claimed in claim 11, the method further comprising:
a version check step of determining whether a version of a set of functions used by the application (130) for the virtual application service (140) can be supported by the virtual application service (140).

18. The method as claimed in claim 17, wherein the virtual application service (140) obtains the version of the set of the functions from the application (130), and determines whether the version can be supported by the virtual application service (140) by referring to information including the version numbers from the functions which can be supported by the virtual application service (140).

19. The method as claimed in claim 11, the method further comprising:
a version check step for determining, function by function, whether a version of a function used by the application (130) for the virtual application service (140) can be supported by the virtual application service (140) .

20. The method as claimed in claim 19, wherein the virtual application service (140) obtains the version of the function from the application (130), and determines whether the version can be supported by the virtual application service (140) by referring to information including the version numbers from the functions which can be supported by the virtual application service (140).

21. A computer program for causing an image forming apparatus (100) to execute wrapping processes, wherein the image forming apparatus (100) includes hardware resources for image formation and an application (130)for performing processes on image processing and an control service (122, 124 to 128, 150) to control the execution of each requested process of the hardware resources according to a function call from the application (130) **characterized in that**:
the computer program comprising:
wrapping program code means for converting a function called by the application (130), and performing a function call to the control service (122, 124 to 128, 150) by using the converted function, wherein the computer program is included in a virtual application service that operates as a client process for the control service and operates as a server process for the application.

22. The computer program as claimed in claim 21, wherein the wrapping program code means converts the function if there is a version difference between the function used by the application (130) for the control service (122, 124 to 128, 150) and a corresponding function in the control service (122, 124 to 128, 150).

23. The computer program as claimed in claim 22, wherein the wrapping program code means determines whether there is the version difference by referring to information indicating that a version of the corresponding function in the control service (122, 124 to 128, 150) has been changed.

24. The computer program as claimed in claim 21, wherein the wrapping program code means converts the function by adding at least a dummy function or at least an argument if the number of functions or the number of arguments is different between the function used in the application (130) for the control service (122, 124 to 128, 150) and the corresponding function in the control service (122, 124 to 128, 150).

25. The computer program as claimed in claim 21, wherein
the wrapping program code means selects messages to be sent to the application (130) from among messages sent from the control service (122, 124 to 128, 150).

26. The computer program as claimed in claim 25, wherein the wrapping program code means selects the messages by referring to information indicating predetermined messages that should not be sent to the application (130).

27. The computer program as claimed in claim 21, the computer program further comprising:
version check program code means for determining whether a version of a set of functions used by the application (130) for the virtual application service (140) can be supported by the virtual application service (140) .

28. The computer program as claimed in claim 27, wherein the version check program code means obtains the version of the set of the functions from the application (130), and determines whether the version can be supported by the virtual application service (140) by referring to information including the version numbers from the functions which can be supported by the virtual application service (140).

29. The computer program as claimed in claim 21, the computer program further comprising:
version check program code means for determining, function by function, whether a version of a function used by the application (130) for the virtual application service (140) can be supported by the virtual application service (140).

30. The computer program as claimed in claim 29, wherein the version check program code means obtains the version of the function from the application (130), and determines whether the version can be supported by the virtual application service (140) by referring to information including the version numbers from the functions which can be supported by the virtual application service (140).

31. A computer readable medium storing program code for causing an image forming apparatus to execute wrapping processes, wherein the image forming apparatus (100) includes hardware resources for image formation and an application (130) for performing processes on image processing and an control service (122, 124 to 128, 150) to control the execution of each requested process of the hardware resources, according to a function call from the application (130) **characterized in that**:
the computer readable medium comprising:
wrapping program code means for converting a function called by the application (130), and performing a function call to the control service (122, 124 to 128, 150) by using the converted function, wherein the computer program is included in a virtual application service that operates as a client process for the control service and operates as a server process for the application.

## Patentansprüche

1. Bilderzeugungsvorrichtung (100), die Hardware-Betriebsmittel für die Bilderzeugung und eine Anwendung (130), um an der Bilderzeugung Prozesse auszuführen, und einen Steuerdienst (122, 124 bis 128, 150), um die Ausführung jedes angeforderten Prozesses der Hardware-Betriebsmittel in Übereinstimmung mit einem Funktionsaufruf von der Anwendung (130) zu steuern, umfasst, **dadurch gekennzeichnet, dass**:
die Bilderzeugungsvorrichtung (100) umfasst:
einen virtuellen Anwendungsdienst (140), der als ein Client-Prozess für den Steuerdienst (122, 124 bis 128, 150) arbeitet und als ein Server-Prozess für die Anwendung (130) arbeitet, und
einen Einhüllungsabschnitt (140), um eine durch die Anwendung (130) aufgerufene Funktion umzusetzen und um einen Funktionsaufruf an den Steuerdienst (122, 124 bis 128, 150) unter Verwendung der umgesetzten Funktion auszuführen, wobei der Einhüllungsabschnitt (140) in dem virtuellen Anwendungsdienst (140) enthalten ist.

2. Bilderzeugungsvorrichtung (100) nach Anspruch 1, wobei der Einhüllungsabschnitt (140) die Funktion umsetzt, falls zwischen der von der Anwendung (130) für den Steuerdienst (122, 124 bis 128, 150) verwendeten Funktion und einer entsprechenden Funktion im Steuerdienst (122, 124 bis 128, 150) ein Versionsunterschied besteht.

3. Bilderzeugungsvorrichtung (100) nach Anspruch 2, wobei der Einhüllungsabschnitt (140) bestimmt, ob ein Versionsunterschied vorhanden ist, indem er auf Informationen Bezug nimmt, die angeben, dass sich eine Version der entsprechenden Funktion in dem Steuerdienst (122, 124 bis 128, 150) geändert hat.

4. Bilderzeugungsvorrichtung (100) nach Anspruch 1, wobei der Einhüllungsabschnitt (140) die Funktion durch Addieren wenigstens einer Leerfunktion oder wenigstens eines Arguments umsetzt, falls die Anzahl von Funktionen oder die Anzahl von Argumenten zwischen der in der Anwendung (130) für den Steuerdienst (122, 124 bis 128, 150) verwendeten Funktion und der entsprechenden Funktion im Steuerdienst (122, 124 bis 128, 150) verschieden ist.

5. Bilderzeugungsvorrichtung (100) nach Anspruch 1,
wobei der Einhüllungsabschnitt (140) an die Anwendung (130) zu sendende Nachrichten aus Nachrichten auswählt, die von dem Steuerdienst (122, 124 bis 128, 150) gesendet wurden.

6. Bilderzeugungsvorrichtung (100) nach Anspruch 5, wobei der Einhüllungsabschnitt (140) die Nachrichten durch Bezugnahme auf Informationen auswählt, die vorgegebene Nachrichten angeben, die nicht zu der Anwendung (130) gesendet werden sollten.

7. Bilderzeugungsvorrichtung (100) nach Anspruch 6, wobei die Bilderzeugungsvorrichtung (100) umfasst:
einen Versionsprüfungsabschnitt, um zu bestimmen, ob eine Version einer Gruppe von Funktionen, die von der Anwendung (130) für den virtuellen Anwendungsdienst (140) verwendet werden, durch den virtuellen Anwendungsdienst (140) unterstützt werden kann.

8. Bilderzeugungsvorrichtung (100) nach Anspruch 7, wobei der Versionsprüfabschnitt die Version der Gruppe der Funktionen von der Anwendung (130) erhält und bestimmt, ob die Version durch den virtuellen Anwendungsdienst (140) unterstützt werden kann, indem er auf Informationen Bezug nimmt, die die Versionsnummern von den Funktionen, die durch den virtuellen Anwendungsdienst (140) unterstützt werden, enthalten.

9. Bilderzeugungsvorrichtung (100) nach Anspruch 6, wobei die Bildverarbeitungsvorrichtung (100) umfasst:
einen Versionsprüfabschnitt, um Funktion für Funktion zu bestimmen, ob eine Version einer von der Anwendung (130) für den virtuellen Anwendungsdienst (140) verwendeten Funktion durch den virtuellen Anwendungsdienst (140) unterstützt werden kann.

10. Bilderzeugungsvorrichtung (100) nach Anspruch 9, wobei der Versionsprüfabschnitt die Version der Funktion von der Anwendung (130) erhält und bestimmt, ob die Version durch den virtuellen Anwendungsdienst (140) unterstützt werden kann, indem er auf Informationen Bezug nimmt, die die Versionsnummern von den Funktionen, die durch den virtuellen Anwendungsdienst (140) unterstützt werden können, enthalten.

11. Verfahren, das durch eine Bilderzeugungsvorrichtung (100) ausgeführt wird, die Hardware-Betriebsmittel für die Bilderzeugung und eine Anwendung (130), um Prozesse an der Bilderzeugung auszuführen, und einen Steuerdienst (122, 124 bis 128, 150), um die Ausführung jedes angeforderten Prozesses der Hardware-Betriebsmittel in Übereinstimmung mit einem Funktionsaufruf von der Anwendung (130) zu steuern, umfasst, **dadurch gekennzeichnet, dass:**
das Verfahren umfasst:
einen virtuellen Anwendungsdienst (140), der als ein Client-Prozess für den Steuerdienst (122, 124 bis 128, 150) arbeitet und als ein Server-Prozess für die Anwendung (130) arbeitet, und
einen Einhüllungsschritt, um eine durch die Anwendung (130) aufgerufene Funktion umzusetzen und um einen Funktionsaufruf an den Steuerdienst (122, 124 bis 128, 150) unter Verwendung der umgesetzten Funktion auszuführen, wobei der Einhüllungsschritt durch den virtuellen Anwendungsdienst (140) ausgeführt wird.

12. Verfahren nach Anspruch 11, wobei die Bilderzeugungsvorrichtung (100) die Funktion umsetzt, falls zwischen der Funktion, die von der Anwendung (130) für den Steuerdienst (122, 124 bis 128, 150) verwendet wird, und einer entsprechenden Funktion im Steuerdienst (122, 124 bis 128, 150) ein Versionsunterschied besteht.

13. Verfahren nach Anspruch 12, wobei die Bilderzeugungsvorrichtung (100) bestimmt, ob ein Versionsunterschied vorhanden ist, indem sie auf Informationen Bezug nimmt, die angeben, dass eine Version der entsprechenden Funktion im Steuerdienst (122, 124 bis 128, 150) und einer entsprechenden Funktion im Steuerdienst (122, 124 bis 128, 150).

14. Verfahren nach Anspruch 11, wobei die Bilderzeugungsvorrichtung (100) die Funktion durch Addieren wenigstens einer Leerfunktion und wenigstens eines Arguments umsetzt, falls die Anzahl von Funktionen oder die Anzahl von Argumenten zwischen der in der Anwendung (130) für den Steuerdienst (122, 124 bis 128, 150) verwendeten Funktion und der entsprechenden Funktion im Steuerdienst (122, 124 bis 128, 150) verschieden ist.

15. Verfahren nach Anspruch 11, wobei
der Einhüllungsschritt zu der Anwendung (130) zu sendende Nachrichten aus Nachrichten, die von dem Steuerdienst (122, 124 bis 128, 150) gesendet werden, auswählt.

16. Verfahren nach Anspruch 15, wobei die Bilderzeugungsvorrichtung die Nachrichten durch Bezugnahme auf Informationen auswählt, die vorgegebene Nachrichten angeben, die nicht zu der Anwendung gesendet werden sollten.

17. Verfahren nach Anspruch 11, wobei das Verfahren ferner umfasst:
einen Versionsprüfschritt, um zu bestimmen, ob eine Version einer Gruppe von Funktionen, die von der Anwendung (130) für den virtuellen Anwendungsdienst (140) verwendet werden, durch den virtuellen Anwendungsdienst (140) unterstützt werden kann.

18. Verfahren nach Anspruch 17, wobei der virtuelle Anwendungsdienst (140) die Version der Gruppe der Funktionen von der Anwendung (130) erhält und bestimmt, ob die Version durch den virtuellen Anwendungsdienst (140) unterstützt werden kann, indem er auf Informationen Bezug nimmt, die die Versionsnummern von den Funktionen, die durch den virtuellen Anwendungsdienst (140) unterstützt werden können, enthalten.

19. Verfahren nach Anspruch 11, wobei das Verfahren ferner umfasst:
einen Versionsprüfschritt, um Funktion für Funktion zu bestimmen, ob eine Version einer von der Anwendung (130) für den virtuellen Anwendungsdienst (140) verwendeten Funktion durch den virtuellen Anwendungsdienst (140) unterstützt werden kann.

20. Verfahren nach Anspruch 19, wobei der virtuelle Anwendungsdienst (140) die Version der Funktion von der Anwendung (130) erhält und bestimmt, ob die Version durch den virtuellen Anwendungsdienst (140) unterstützt werden kann, indem er auf Informationen Bezug nimmt, die die Versionsnummern von den Funktionen, die durch den virtuellen Anwendungsdienst (140) unterstützt werden können, enthalten.

21. Computerprogramm, um eine Bilderzeugungsvorrichtung (100) dazu zu veranlassen, Einhüllungsprozesse auszuführen, wobei die Bilderzeugungsvorrichtung (100) Hardware-Betriebsmittel für die Bilderzeugung und eine Anwendung (130), um Prozesse an der Bildverarbeitung auszuführen, und einen Steuerdienst (122, 124 bis 128, 150), um die Ausführung jedes angeforderten Prozesses der Hardware-Betriebsmittel in Übereinstimmung mit einem Funktionsaufruf von der Anwendung (130) zu steuern, umfasst, **dadurch gekennzeichnet, dass**:
das Computerprogramm umfasst:
Einhüllungsprogrammcode-Mittel, um eine durch die Anwendung (130) aufgerufene Funktion umzusetzen und um einen Funktionsaufruf an den Steuerdienst (122, 124 bis 128, 150) unter Verwendung der umgesetzten Funktion auszuführen, wobei das Computerprogramm in einem virtuellen Anwendungsdienst enthalten ist, der als ein Client-Prozess für den Steuerdienst arbeitet und als ein Server-Prozess für die Anwendung arbeitet.

22. Computerprogramm nach Anspruch 21, wobei die Einhüllungsprogrammcode-Mittel die Funktion umsetzen, falls zwischen der von der Anwendung (130) für den Steuerdienst (122, 124 bis 128, 150) verwendeten Funktion und einer entsprechenden Funktion im Steuerdienst (122, 124 bis 128, 150) ein Versionsunterschied besteht.

23. Computerprogramm nach Anspruch 22, wobei die Einhüllungsprogrammcode-Mittel bestimmen, ob ein Versionsunterschied vorhanden ist, indem sie auf Informationen Bezug nehmen, die angeben, dass sich eine Version der entsprechenden Funktion im Steuerdienst (122, 124 bis 128, 150) geändert hat.

24. Computerprogramm nach Anspruch 21, wobei die Einhüllungsprogrammcode-Mittel die Funktion durch Addieren wenigstens einer Leerfunktion oder wenigstens eines Arguments umsetzen, falls die Anzahl von Funktionen oder die Anzahl von Argumenten zwischen der in der Anwendung (130) für den Steuerdienst (122, 124 bis 128, 150) verwendeten Funktion und der entsprechenden Funktion im Steuerdienst (122, 124 bis 128, 150) verschieden ist.

25. Computerprogramm nach Anspruch 21, wobei
die Einhüllungsprogrammcode-Mittel Nachrichten, die zu der Anwendung (130) gesendet werden sollen, aus Nachrichten, die von dem Steuerdienst (122, 124 bis 128, 150) gesendet werden, auswählt.

26. Computerprogramm nach Anspruch 25, wobei die Einhüllungsprogrammcode-Mittel die Nachrichten auswählen, indem sie auf Informationen Bezug nehmen, die vorgegebene Nachrichten angeben, die nicht zu der Anwendung (130) gesendet werden sollten.

27. Computerprogramm nach Anspruch 21, wobei das Computerprogramm ferner umfasst:
Versionsprüfprogrammcode-Mittel, um zu bestimmen, ob eine Version einer Gruppe von Funktionen, die von der Anwendung (130) für den virtuellen Anwendungsdienst (140) verwendet werden, durch den virtuellen Anwendungsdienst (140) unterstützt werden kann.

28. Computerprogramm nach Anspruch 27, wobei die Versionsprüfprogrammcode-Mittel die Version der Gruppe der Funktionen von der Anwendung (130) erhalten und bestimmen, ob die Version durch den virtuellen Anwendungsdienst (140) unterstützt werden kann, indem sie auf Informationen Bezug nehmen, die die Versionsnummern von den Funktionen, die durch den virtuellen Anwendungsdienst (140) unterstützt werden können, enthalten.

29. Computerprogramm nach Anspruch 21, wobei das Computerprogramm ferner umfasst:
Versionsprüfprogrammcode-Mittel, um Funktion für Funktion zu bestimmen, ob eine Version einer von der Anwendung (130) für den virtuellen Anwendungsdienst (140) verwendeten Funktion durch den virtuellen Anwendungsdienst (140) unterstützt werden kann.

30. Computerprogramm nach Anspruch 29, wobei die Versionsprüfprogrammcode-Mittel die Version der Funktion von der Anwendung (130) erhalten und bestimmen, ob die Version durch den virtuellen Anwendungsdienst (140) unterstützt werden kann, indem sie auf Informationen Bezug nehmen, die die Versionsnummern von den Funktionen, die durch den virtuellen Anwendungsdienst (140) unterstützt werden können, enthalten.

31. Computerlesbares Medium, das Programmcode speichert, um eine Bilderzeugungsvorrichtung dazu zu veranlassen, Einhüllungsprozesse auszuführen, wobei die Bilderzeugungsvorrichtung (100) Hardware-Betriebsmittel für die Bilderzeugung und eine Anwendung (130), um Prozesse an der Bildverarbeitung auszuführen, und einen Steuerdienst (122, 124 bis 128, 150), um die Ausführung jedes angeforderten Prozesses der Hardware-Betriebsmittel in Übereinstimmung mit einem Funktionsaufruf von der Anwendung (130) zu steuern, umfasst, **dadurch gekennzeichnet, dass**:
das computerlesbare Medium umfasst:
Einhüllungsprogrammcode-Mittel, um eine von der Anwendung (130) aufgerufene Funktion umzusetzen und um einen Funktionsaufruf an den Steuerdienst (122, 124 bis 128, 150) unter Verwendung der umgesetzten Funktion auszuführen, wobei das Computerprogramm in einem virtuellen Anwendungsdienst enthalten ist, der als ein Client-Prozess für den Steuerdienst arbeitet und als ein Server-Prozess für die Anwendung arbeitet.

## Revendications

1. Appareil de formation d'image (100) qui inclut des ressources matérielles pour la formation d'image et une application (130) pour effectuer des processus sur la formation d'image et un service de contrôle (122, 124 à 128, 150) pour contrôler l'exécution de chaque processus demandé des ressources matérielles selon un appel de fonction depuis l'application (130), **caractérisé en ce qui** :
l'appareil de formation d'image (100) comprenant :
un service d'application virtuel (140) qui fonctionne comme un processus client pour le service de contrôle (122, 124 à 128, 150) et fonctionne comme un processus serveur pour l'application (130), et
une partie d'enveloppement (140) pour convertir une fonction appelée par l'application (130), et effectuer un appel de fonction au service de contrôle (122, 124 à 128, 150) en utilisant la fonction convertie, où la partie d'enveloppement (140) est incluse dans le service d'application virtuel (140).

2. Appareil de formation d'image (100) selon la revendication 1, dans lequel la partie d'enveloppement (140) convertit la fonction s'il y a une différence de version entre la fonction utilisée par l'application (130) pour le service de contrôle (122, 124 à 128, 150) et une fonction correspondante dans le service de contrôle (122, 124 à 128, 150).

3. Appareil de formation d'image (100) selon la revendication 2, dans lequel la partie d'enveloppement (140) détermine s'il y a la différence de version en se référant à des informations indiquant qu'une version de la fonction correspondante dans le service de contrôle (122, 124 à 128, 150) a été changée.

4. Appareil de formation d'image (100) selon la revendication 1, dans lequel la partie d'enveloppement (140) convertit la fonction en ajoutant au moins une fonction fictive ou au moins un argument si le nombre de fonctions ou le nombre d'arguments est différent entre la fonction utilisée dans l'application (130) pour le service de contrôle (122, 124 à 128, 150) et la fonction correspondante dans le service de contrôle (122, 124 à 128, 150).

5. Appareil de formation d'image (100) selon la revendication 1,
dans lequel la partie d'enveloppement (140) sélectionne des messages à envoyer à l'application (130) parmi des messages envoyés depuis le service de contrôle (122, 124 à 128, 150).

6. Appareil de formation d'image (100) selon la revendication 5, dans lequel la partie d'enveloppement (140) sélectionne les messages en se référant à des informations indiquant des messages prédéterminés qui ne devraient pas être envoyés à l'application (130).

7. Appareil de formation d'image (100) selon la revendication 6, l'appareil de formation d'image (100) comprenant :
une partie de vérification de version pour déterminer si une version d'un ensemble de fonctions utilisées par l'application (130) pour le service d'application virtuel (140) peut être supportée par le service d'application virtuel (140).

8. Appareil de formation d'image (100) selon la revendication 7, dans lequel la partie de vérification de version obtient la version de l'ensemble des fonctions à partir de l'application (130), et détermine si la version peut être supportée par le service d'application virtuel (140) en se référant à des informations incluant les numéros de version des fonctions qui peuvent être supportées par le service d'application virtuel (140).

9. Appareil de formation d'image (100) selon la revendication 6, l'appareil de formation d'image (100) comprenant :
une partie de vérification de version pour déterminer, fonction par fonction, si une version d'une fonction utilisée par l'application (130) pour le service d'application virtuel (140) peut être supportée par le service d'application virtuel (140) .

10. Appareil de formation d'image (100) selon la revendication 9, dans lequel la partie de vérification de version obtient la version de la fonction à partir de l'application (130), et détermine si la version peut être supportée par le service d'application virtuel (140) en se référant à des informations incluant les numéros de version des fonctions qui peuvent être supportées par le service d'application virtuel (140).

11. Procédé exécuté par un appareil de formation d'image (100) qui inclut des ressources matérielles pour la formation d'image et une application (130) pour effectuer des processus sur la formation d'image et un service de contrôle (122, 124 à 128, 150) pour contrôler l'exécution de chaque processus demandé des ressources matérielles selon un appel de fonction depuis l'application (130), **caractérisé en ce que** :
le procédé comprenant :
un service d'application virtuel (140) qui fonctionne comme un processus client pour le service de contrôle (122, 124 à 128, 150) et fonctionne comme un processus serveur pour l'application (130), et
une étape d'enveloppement consistant à convertir une fonction appelée par l'application (130), et effectuer un appel de fonction au service de contrôle (122, 124 à 128, 150) en utilisant la fonction convertie, où l'étape d'enveloppement est exécutée par le service d'application virtuel (140).

12. Procédé selon la revendication 11, dans lequel l'appareil de formation d'image (100) convertit la fonction s'il y a une différence de version entre la fonction utilisée par l'application (130) pour le service de contrôle (122, 124 à 128, 150) et une fonction correspondante dans le service de contrôle (122, 124 à 128, 150).

13. Procédé selon la revendication 12, dans lequel l'appareil de formation d'image (100) détermine s'il y a la différence de version en se référant à des informations indiquant qu'une version de la fonction correspondante dans le service de contrôle (122, 124 à 128, 150) et une fonction correspondante dans le service de contrôle (122, 124 à 128, 150) a été changée.

14. Procédé selon la revendication 11, dans lequel l'appareil de formation d'image (100) convertit la fonction en ajoutant au moins une fonction fictive ou au moins un argument si le nombre de fonctions ou le nombre d'arguments est différent entre la fonction utilisée dans l'application (130) pour le service de contrôle (122, 124 à 128, 150) et la fonction correspondante dans le service de contrôle (122, 124 à 128, 150).

15. Procédé selon la revendication 11, dans lequel
l'étape d'enveloppement sélectionne des messages à envoyer à l'application (130) parmi des messages envoyés depuis le service de contrôle (122, 124 à 128, 150).

16. Procédé selon la revendication 15, dans lequel l'appareil de formation d'image sélectionne les messages en se référant à des informations indiquant des messages prédéterminés qui ne devraient pas être envoyés à l'application.

17. Procédé selon la revendication 11, le procédé comprenant en outre :
une étape de vérification de version consistant à déterminer si une version d'un ensemble de fonctions utilisées par l'application (130) pour le service d'application virtuel (140) peut être supportée par le service d'application virtuel (140).

18. Procédé selon la revendication 17, dans lequel le service d'application virtuel (140) obtient la version de l'ensemble des fonctions à partir de l'application (130), et détermine si la version peut être supportée par le service d'application virtuel (140) en se référant à des informations incluant les numéros de version des fonctions qui peuvent être supportées par le service d'application virtuel (140).

19. Procédé selon la revendication 11, le procédé comprenant en outre :
une étape de vérification de version pour déterminer, fonction par fonction, si une version d'une fonction utilisée par l'application (130) pour le service d'application virtuel (140) peut être supportée par le service d'application virtuel (140).

20. Procédé selon la revendication 19, dans lequel le service d'application virtuel (140) obtient la version de la fonction à partir de l'application (130) et détermine si la version peut être supportée par le service d'application virtuel (140) en se référant à des informations incluant les numéros de version des fonctions qui peuvent être supportées par le service d'application virtuel (140).

21. Programme informatique pour amener un appareil de formation d'image (100) à exécuter des processus d'enveloppement, dans lequel l'appareil de formation d'image (100) inclut des ressources matérielles pour la formation d'image et une application (130) pour effectuer des processus sur la formation d'image et un service de contrôle (122, 124 à 128, 150) pour contrôler l'exécution de chaque processus demandé des ressources matérielles selon un appel de fonction depuis l'application (130), **caractérisé en ce que** :
le programme informatique comprenant :
des moyens de code de programme d'enveloppement pour convertir une fonction appelée par l'application (130) et effectuer un appel de fonction au service de contrôle (122, 124 à 128, 150) en utilisant la fonction convertie, où le programme informatique est inclus dans un service d'application virtuel qui fonctionne comme un processus client pour le service de contrôle et fonctionne comme un processus serveur pour l'application.

22. Programme informatique selon la revendication 21,
dans lequel les moyens de code de programme d'enveloppement convertissent la fonction s'il y a une différence de version entre la fonction utilisée par l'application (130) pour le service de contrôle (122, 124 à 128, 150) et une fonction correspondante dans le service de contrôle (122, 124 à 128, 150).

23. Programme informatique selon la revendication 22,
dans lequel les moyens de code de programme d'enveloppement déterminent s'il y a la différence de version en se référant à des informations indiquant qu'une version de la fonction correspondante dans le service de contrôle (122, 124 à 128, 150) a été changée.

24. Programme informatique selon la revendication 21,
dans lequel les moyens de code de programme d'enveloppement convertissent la fonction en ajoutant au moins une fonction fictive ou au moins un argument si le nombre de fonctions ou le nombre d'arguments est différent entre la fonction utilisée dans l'application (130) pour le service de contrôle (122, 124 à 128, 150) et la fonction correspondante dans le service de contrôle (122, 124 à 128, 150).

25. Programme informatique selon la revendication 21,
dans lequel
les moyens de code de programme d'enveloppement sélectionnent des messages à envoyer à l'application (130) parmi des messages envoyés depuis le service de contrôle (122, 124 à 128, 150).

26. Programme informatique selon la revendication 25,
dans lequel les moyens de code de programme d'enveloppement sélectionnent les messages en se référant à des informations indiquant des messages prédéterminés qui ne devraient pas être envoyés à l'application (130).

27. Programme informatique selon la revendication 21, le programme informatique comprenant en outre :
des moyens de code de programme de vérification de version pour déterminer si une version d'un ensemble de fonctions utilisées par l'application (130) pour le service d'application virtuel (140) peut être supportée par le service d'application virtuel (140).

28. Programme informatique selon la revendication 27,
dans lequel les moyens de code de programme de vérification de version obtiennent la version de l'ensemble des fonctions à partir de l'application (130), et déterminent si la version peut être supportée par le service d'application virtuel (140) en se référant à des informations incluant les numéros de version des fonctions qui peuvent être supportées par le service d'application virtuel (140).

29. Programme informatique selon la revendication 21, le programme informatique comprenant en outre :
des moyens de code de programme de vérification de version pour déterminer, fonction par fonction, si une version d'une fonction utilisée par l'application (130) pour le service d'application virtuel (140) peut être supportée par le service d'application virtuel (140).

30. Programme informatique selon la revendication 29,
dans lequel les moyens de code de programme de vérification de version obtiennent la version de la fonction à partir de l'application (130), et déterminent si la version peut être supportée par le service d'application virtuel (140) en se référant à des informations incluant les numéros de version des fonctions qui peuvent être supportées par le service d'application virtuel (140).

31. Support lisible par ordinateur stockant un code de programme pour amener un appareil de formation d'image à exécuter des processus d'enveloppement, dans lequel l'appareil de formation d'image (100) inclut des ressources matérielles pour la formation d'image et une application (130) pour effectuer des processus sur la formation d'image et un service de contrôle (122, 124 à 128, 150) pour contrôler l'exécution de chaque processus demandé des ressources matérielles selon un appel de fonction depuis l'application (130), **caractérisé en ce que** :
le support lisible par ordinateur comprenant :
des moyens de code de programme d'enveloppement pour convertir une fonction appelée par l'application (130), et effectuer un appel de fonction au service de contrôle (122, 124 à 128, 150) en utilisant la fonction convertie, où le programme informatique est inclus dans un service d'application virtuel qui fonctionne comme un processus client pour le service de contrôle et fonctionne comme un processus serveur pour l'application.
